# EUROPEAN PATENT APPLICATION

(11) **EP 3 378 538 A1**
(43) Date of publication of application: **26.09.2018**
(21) Application number: 17162064.4
(22) Date of filing: 21.03.2017
(51) Int. Cl.: A62B 3/00, A62B 5/00, A62C 2/12, F16K 17/196

(54) **A PRESSURE REGULATING UNIT FOR REGULATING PRESSURE RESULTED FROM A FIRE IN A ROOM**

(71) Applicant: Hagab Industri AB, 562 02 Taberg (SE)
(72) Inventor: Axelsson, Börje, 566 33 Habo (SE)
(74) Representative: AWA Sweden AB

(57) **Abstract**

A pressure regulating unit (1) for regulating the pressure resulted from a fire in a room volume (100), comprising a main body (10) having a first opening (11) adapted to be mounted in fluid connection to the inside of said room volume, and a second opening (12) adapted to be mounted in fluid connection to an outside of said room volume. The pressure regulating device further comprise a valve member (13) arranged between said first opening and said second opening, said valve member being movable between a first closed position (A) and a second open position (B). Further, the valve member opens when the pressure in said room volume exceeds a predetermined positive pressure threshold level (P_{P}) or falls below a predetermined negative pressure threshold level (P_{L}) and is in said closed position during pressure levels in the room volume being between said positive pressure threshold level and negative pressure threshold level.

## Description

### Technical field of the invention

The present invention relates to fire valve units for preventing effects of a fire in a building.

### Technical background

It is generally known that a fire in a building affects the gaseous pressure so that the pressure initially increases and subsequently decreases relative the atmospheric pressure. This knowledge has primarily been used to study the spreading of gases originating from the fire in ventilation systems. Today's strict construction regulations related to energy efficiency results in that new buildings are basically airtight compartments. The consequence in relation to fires is that the fire heats the air inside the airtight compartment the pressure is dramatically increased, and subsequently the pressure drops since the oxygen level in the compartment limits the fire, resulting in that the temperature (and thereby pressure) in the room drops. Experiments show that pressures may increase to about +1500 Pa and a subsequent decrease in pressure of about -1000 Pa relative the pressure before the fire.

### Summary of the invention

The inventor has realized that there are a number of problems arising from the pressure fluctuation in a building during a fire. Therefore, there is a need of improving how the buildings handling the pressure during a fire. Specifically, the inventor has realized that the force required for manually opening of doors is directly affected by the pressure in the room, and that the pressure on a door dramatically exceed the construction requirements on forces required to open doors upon a fire. This has even caused deaths during fires, where the victims have been found dead on the inside of the door, since they have not had enough strength to open the door due to the pressure generated by the fire.

An object of the present invention is to provide a solution that at least alleviated the above mentioned problems related to pressure differences during a fire in a closed room.

The invention is based on the inventor's insight that by providing a room with an opening to an outside of the room and by installing a 2-way valve device in said opening, the pressure increase and decrease during a fire may be alleviated. Further, by keeping the 2-way valve device closed under normal pressure levels, the strict construction regulations related to energy efficiency may also be met.

Above-mentioned objects are realized through a pressure regulating unit for regulating the pressure resulted from a fire in a room volume, comprising a main body having a first opening adapted to be mounted in fluid connection to the inside of said room volume, and a second opening adapted to be mounted in fluid connection to an outside of said room volume. The pressure regulating device further comprise a valve member arranged between said first opening and said second opening, said valve member being movable between a first closed position and a second open position. Further, the valve member opens when the pressure in said room volume exceeds a predetermined positive pressure threshold level or falls below a predetermined negative pressure threshold level and is in said closed position during pressure levels in the room volume being between said positive pressure threshold level and negative pressure threshold level. Hereby, a pressure regulating unit may be provided that enables someone who is trapped inside a room with a fire to be able to open the door to exit the room comprising the fire. This invention may therefore save lives.

In the context of this application, any "in fluid connection" should be understood as a gaseous fluid may flow between the first and second object being in fluid connection.

In one embodiment, the valve member automatically returns to the closed position when the pressure in said room volume returns to a level that lies between a predetermined positive pressure threshold level and a predetermined negative pressure threshold level. Hereby, the valve member does not have to be repositioned into the closed position manually after an increase in pressure in the room volume.

In yet one embodiment, the positive pressure threshold level and/or said negative pressure threshold level is calculated based on the force required to evacuate the room, by e.g. opening the door or a window in a room. Hereby, the door/window may always be openable to user.

In one embodiment the positive pressure threshold level and/or said negative pressure threshold level is at least about 50Pa/-50Pa, least about 100Pa/-100Pa, at least about 150Pa/-150Pa, or at least about 250Pa/-250Pa.

In yet one embodiment, the valve unit is sized and formed so that the pressure increase/decrease in the room volume alone moves the valve member from the closed position to the open position. Hereby, no electronic equipment such as sensors and/or motors need to be used. It is of course possible to use electronic sensors and motors, but the solution will be much more expensive than a mechanical solution.

In one embodiment, the valve means is deformable so that it may change from an open state to a closed state and vice versa. In yet one embodiment, the valve means is deformable by means of a flexible material. E.g. a fire proof deformable textile may be used for the valve member.

In yet one embodiment, the pressure regulating unit further comprise a returning means for returning the valve means from the open position to the closed position.

In yet one embodiment, the force that the returning means exerts on the valve means for bringing it to, or keeping it in, the closed positon is based on calculations derived from the positive pressure threshold level or negative pressure threshold. E.g. in one embodiment, the force exerted from the returning means on the valve means for bringing it to, or keeping it in, the closed positon corresponds to a force the pressure at either the positive pressure threshold level or negative pressure threshold level exerts on the valve means.

In yet one embodiment, the returning means is a springing means, such as a spring, coil spring or similar.

In one embodiment, the valve member comprises an outlet portion for letting out air during pressure levels above said positive pressure threshold level and one inlet portion for letting in air during pressure levels below the negative pressure threshold level.

In yet one embodiment, the outlet portion is axially displaced relative the inlet portion, so as to create an intermediate insulating volume.

In another embodiment the outlet portion is juxtaposed arranged relative the inlet portion.

According to a second aspect of the invention, the above-mention problems are at least partly alleviated by providing a room comprising a plurality of surfaces defining a room volume and restricting flow of gas to/from said room volume, an opening in at least one of said plurality of surfaces, and a pressure regulating unit according to any of above mentioned embodiments. Further, the pressure regulating unit is installed in the opening to allow flow of gas to/from the room to pressure neutralize the room. Hereby, exiting the room during a fire is facilitated.

In one embodiment the room comprise additional openings in at least one of said plurality of surfaces, and one pressure regulating unit according to any of the above mentioned embodiments installed in each one of said additional openings to allow flow of gas to/from said room to pressure neutralize said room. Hereby, even a large room may be pressure relieved so as to facilitate to exit the room during a fire.

In one embodiment, the valve member is arranged onto a rotational axle and adapted to rotate between the first closed position and the second open position.

In yet one embodiment, the valve member's outlet portion for letting out air during pressure levels above said positive pressure threshold level is arranged on a first side of the rotational axle, and the inlet portion for letting in air during pressure levels below the negative pressure threshold level arranged a second side of the rotational axle, being opposite of the first side.

In one embodiment, the valve member 13 is adapted to rotate around the rotational axle as a consequence of that the outlet portion is opened, or that the inlet portion is opened.

In one embodiment, the outlet portion for letting out air during pressure levels above said positive pressure threshold level pivots around the rotational axle without affecting the orientation of the inlet portion which may be individually pivotable for letting in air during pressure levels below the negative pressure threshold level.

In an alternative embodiment, the outlet portion and the inlet portion are coupled so as to move together around the rotational axle, but in opposite rotational directions.

In one embodiment, at least a portion of the valve member comprise an arched surface. Hereby, even if the rotational axle is placed centrally, the valve member may be designed to rotate around the central axle as a result of the pressure difference.

In one embodiment, the pressure regulating unit comprise a stopping means for stopping the inlet portion, the outlet portion, and/or the valve member in its stopping position. In some embodiments there may be several stopping means arranged for one or several components.

In one embodiment, at least two portions of the valve member comprise an arched surface, wherein the arched surfaces are arranged on different sides of the rotational axle, and one of the facing the first opening and the other one facing the second opening. Hereby, even if the rotational axle is placed centrally, the valve member may be designed to rotate around the central axle as a result of the pressure difference being both negative or positive.

All the embodiments mentioned above may be combined with each other, unless having obviously non-compatible designs.

### Brief description of the drawings

Further details and aspect of the present invention will become apparent from the following detailed description with reference to accompanying drawings, in which:
fig. 1 shows an illustration of a pressure regulating unit according to one embodiment of the invention,
fig. 2 shows a top view of an illustration of a room in which a fire is burning and a pressure regulating unit is installed,
fig. 3 shows a graph over the pressure over time during a fire in a closed room,
fig. 4a-4d shows the valve member according to four embodiments, wherein each figure shows a front view and a side cross-sectional view of the embodiment, and
fig. 5a-5d shows the valve member according to four embodiments, wherein each figure shows a front view and a side cross-sectional view of the embodiment,
Fig. 6a-6d illustrates a top cross-sectional view of the valve member according to one embodiment, and how it reacts to pressure differences, and
Fig. 7a-7d illustrates front views and top cross-sectional views of the valve member according to one embodiment, and how it reacts to pressure differences.

### Detailed description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout the application. When the same elements are repeatedly shown in a figure, not all such elements are specifically referred to with reference characters.

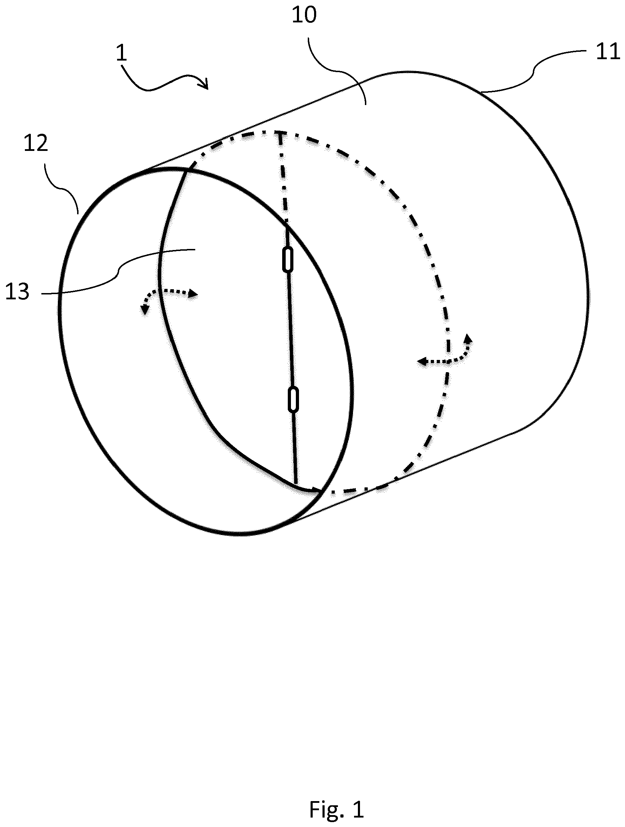

Fig. 1 illustrate a pressure regulating unit 1 according to one embodiment of the invention, wherein the pressure regulating unit 1 comprise a main body 10. In this illustration the main body is circular. The main body shape may however be of any shape, as long as the shape fits into a hole in one of the walls/roof/ceiling in the room. An advantage with a circular, tube formed main body 10 is that the hole may be easily achieved by a hole saw with a diameter corresponding to the outer diameter of the main body.

The outer diameter may be chosen so that enough air may flow though the pressure regulating unit 1, to pressure relief the room volume during a fire. E.g. the outer diameter may be about 50-500mm, or preferably about 100-250mm or most preferably about 130-200mm.

Further, the main body 10 comprise a first opening 11 and a second opening 12. The first opening 11 is to be installed towards the inside of the room volume, and the second opening 12 towards an outside of the room. Hereby, the main body fluidly connects the room volume with a volume outside of the room. Preferably, the outside of the room is directly or indirectly connected to the outside of a building, so that an efficient pressure relief may be achieved.

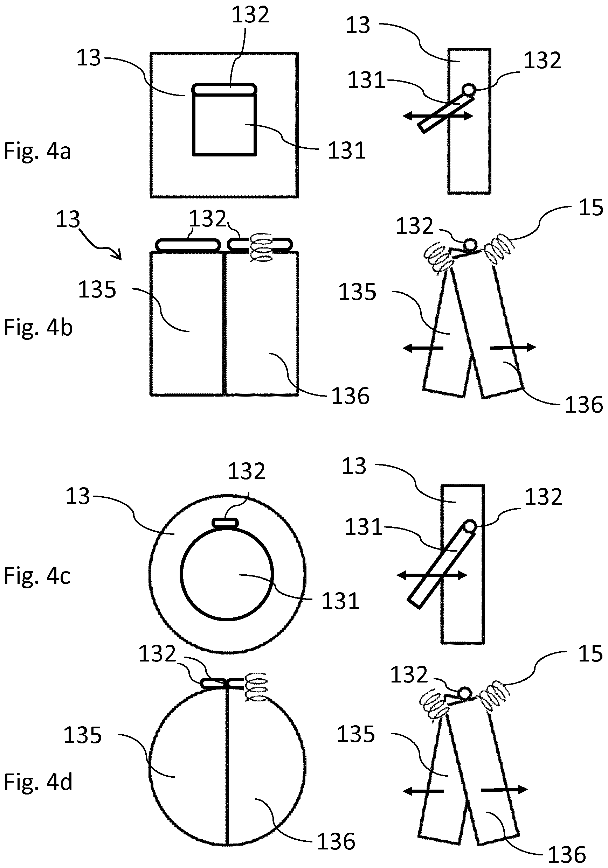

Further, fig 1 illustrates that the pressure regulating unit comprise a valve member 13. The valve member 13 is adapted to move from a first closed position A to a second open position B (not shown in fig 1). This is further explained when figures 4-5 are described below. When the valve member 13 is in the closed position A, the room volume may be substantially closed, so at to meet the energy efficiency regulations.

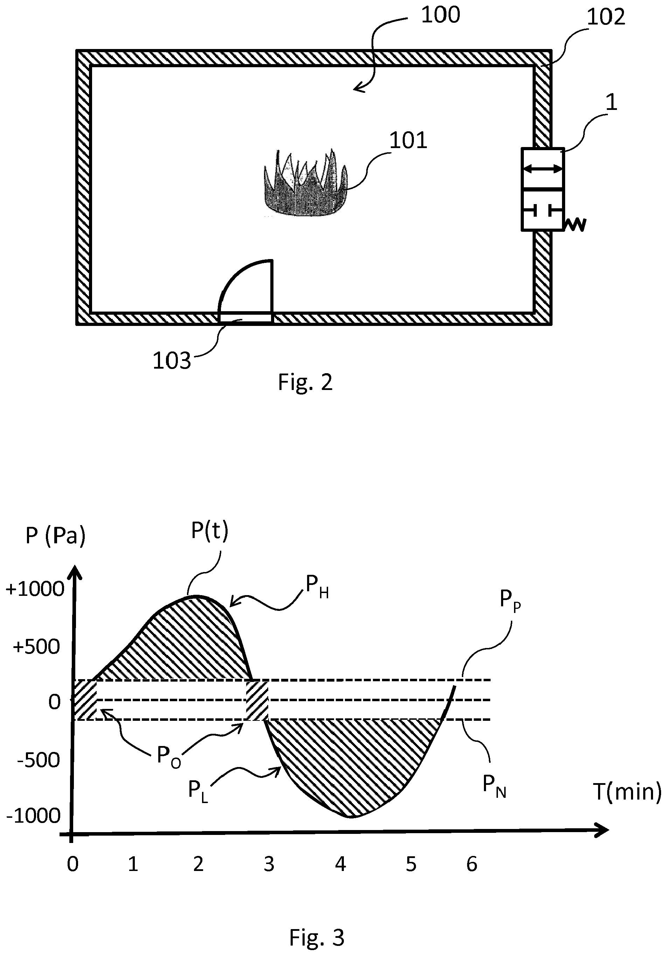

fig. 2 shows a top view of an illustration of a room 100 defining a room volume. Afire 101 is burning inside the room and a pressure regulating unit 1 is installed in one of the walls 102. Also, a door 103 is illustrated in the room. The pressure regulating unit may of course be arranged in any wall and/or ceiling or even floor of the room. If the room is large, it may be advantageous to have a plurality of pressure regulating units in the room volume. Also, if there are dividing walls inside a room, having a pressure regulating unit 1 installed in each portion of the room may be beneficial, especially if there are doors that would be opened to exit the room, in case of a fire.

Further, fig. 3 shows a graph P(t) illustrating the pressure difference over time during a fire in a closed room. The initial pressure is starting at a point wherein the pressure on the inside of the room is about the same as the pressure on the outside of the room. This starting pressure may be e.g. 1 bar (about 100 000 Pa). The graph is generated from data during measurements in fires in closed rooms conducted by the applicant. In the experiments a fluid heptane was lit in a room volume while measuring the pressure in the room during the fire development in the room. As can be seen from this graph, when a fire takes place in the room, within less than one minute the relative pressure increase to a level above the denoted positive pressure threshold level P_{P}. This pressure level is denoted as a dashed upper line and as about +100Pa in the illustration. If the door has a surface of 2m² the force acting on the door is 200N at +100Pa increase in pressure relative the outside. Since the door is usually hinged at one side and has a handle at the opposite side, the force for opening the door is about half the force of the force acting on the door. That is, for +100 Pa the force for opening the door is about 100N.

Further, a negative pressure threshold level P_{N} is denoted as the dashed lower line and as about -100Pa in the graph. Two striped areas P_{H}, P_{L} indicating when the pressure is either higher P_{H} than the positive pressure threshold level P_{P}, or lower P_{L} than the predetermined negative pressure threshold level P_{N} is denoted in the graph. The high pressure range P_{H} is reached already within the minute of the fire in the measurements. Before the high pressure range P_{H} is reached, it is possible to open the door, illustrated by an opening pressure Po corresponding to the pressure in the room when the door is openable with manpower (or according to construction regulations). The time during which the pressure in the room corresponds to an opening pressure Po is denoted in the graph.

After the high pressure range P_{H} is over, after about 3 minutes (when the oxygen level is too low for the fire to continue to grow), there is a new window of opportunity to open the door again, when the pressure in the room is back to the opening pressure Po, and before the pressure drops below the predetermined negative pressure threshold level P_{N}.

Thereafter, the pressure drops below the predetermined negative pressure threshold level P_{N} again and the force required to open the door is higher than can be expected by most people and/or higher than regulations require. The positive pressure threshold level P_{P} and the negative pressure threshold level P_{N} may be chosen so that the valve opens corresponding to a desired force level for opening the door.

By introducing the pressure regulating unit into the room, the variation of pressure as a function over time may be reduced. In fact, although there will be a pressure increase and decrease, the maximum increase may be kept in pressure levels around the positive pressure threshold level P_{P}. Further the maximum negative pressure drop may be kept within the negative pressure threshold level P_{N}. Hereby, the door may be openable throughout the fire in the room.

Moreover, fig. 4a-4d shows the valve member according to four different embodiments, wherein each figure shows a front view and a side view of the embodiment. Fig 4a show a valve member 13 having a movable restriction device 131. The restriction device 131 is closed during normal pressure Po levels, corresponding to the pressure outside of the room. Further the restriction device 131 opens upon a pressure difference either exceeding the positive pressure threshold level P_{P} or falling below the negative pressure threshold level P_{N}. In fig. 4a the restriction device 131 is pivotably arranged in its top portion, and arranged within the valve member 13. The restriction device may pivot in a first direction to allow flow out of the room volume and in a second direction to allow flow into the room volume. Although not illustrated, the restriction device may be resiliently arranged so as to return to its closed position during a pressure Po being in between the positive pressure threshold level P_{P} and the negative pressure threshold level P_{N}. Further, the restriction device may return to its closed position by merely gravitation if the pivotal arrangement is arranged in its top portion. Hereby, the weight of the restriction device will pull it into the closed position, when being pushed by the increased/decreased pressure inside the room. Further, the right part of the figure show how air can pass through the valve member 13 in an open state. The arrows in respective direction indicates the movement of the restriction member 131 to allow inlet flow and outlet flow, respectively.

Further, fig 4b disclose the valve member 13 being divided into an outlet portion 135 for letting out air during pressure levels above said positive pressure P_{P} threshold level and one inlet portion 136 for letting in air in the room volume during pressure levels below the negative pressure P_{N} threshold level. To the left in the figure a front side illustration is shown, where the inlet portion 136 comprise a returning means 15, in this case being in the form of a coil spring. The returning means 15 is also shown in the side view to the right, and there it is shown that the outlet portion 135 also comprise a returning means 15 in the form of a coil spring. The returning means 15 may be any type of means for bringing the inlet portion into the closed position. E.g. an electric actuator or a resilient material or device. Depending on the form of the returning means it may be provided on the opening side of the inlet/outlet portion so as to push the portion back into the closed position, it can also be provided on the opposite side so as to pull the portion back into the closed position. As has been explained above, in relation to the restriction device 131, the inlet portion 136 and or outlet portion 135 may return to its closed position by merely gravitation if the pivotal arrangement is arranged in its top portion. Further, the pressure regulating unit 1 may comprise a stopping means 65 for stopping the inlet portion 136 and/or the outlet portion 137 in its closed position, so that the returning means 15 hold the inlet portion or outlet portion against said stopping means. Said stopping means may be a projection from the main body 10. As in figure 4a, the right part of fig 4b show how air can pass through the valve member 13 in an open state. The arrows in respective direction indicates the movement of the valve member (inlet and outlet portions) to allow inlet flow and outlet flow, respectively.

Fig 4c illustrates a valve member 13, having a similar set-up as in fig 4a, but with a round outer form instead of a rectangular outer form. Also, the restricting device 131 is round in the embodiment disclosed in fig 4c.

Correspondingly, Fig 4d illustrates a valve member 13, having a similar set-up as in fig 4b, but with a round outer form instead of a rectangular outer form.

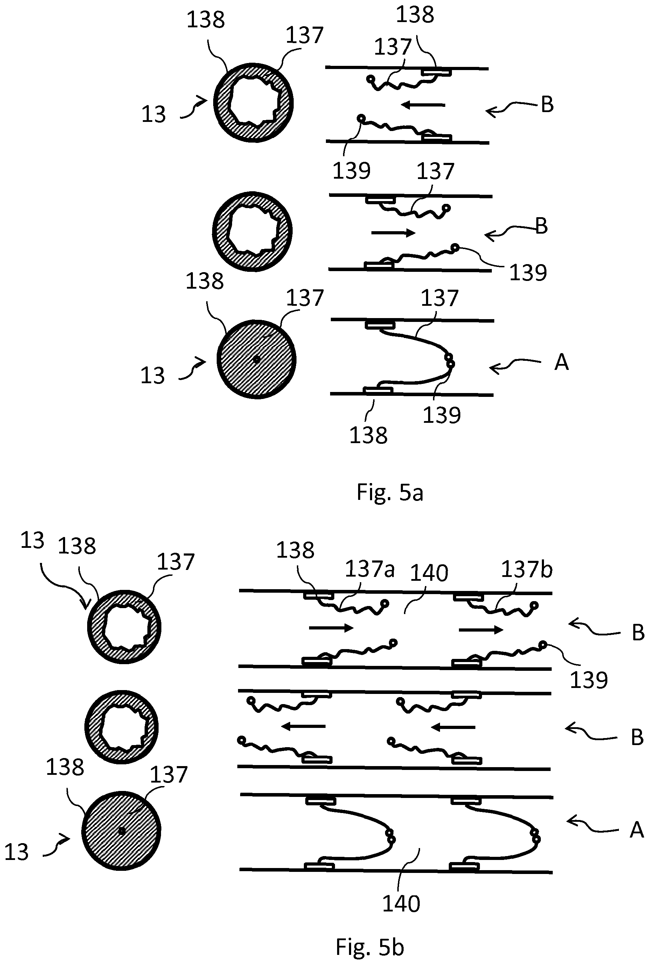

fig. 5a-5d shows the valve member according to four different embodiments, wherein each figure shows a front view and a side view of the embodiment. In figure 5a-5b the valve means 13 is a flexible material 137 being deformable. For example, the flexible material may be a fire proof deformable textile.

The illustrated flexible material 137 is designed to open in response to a pressure difference in the room volume relative the pressure outside of the room volume. The left illustrations in both fig. 5a and 5b illustrates cross-sectional end views of the valve means 13. The flexible material 137 may either be in a closed state A or an open state B. During the open states B the flexible material 137 may either be in an inlet position or an outlet position, depending on if there is a positive or negative pressure in the room volume that is to be pressure relieved.

The flexible material 137 is attached, either directly or indirectly, to the main body 10 of the pressure regulating unit 1. The flexible material 137 may be attached to the main body 10 by means of a holding member 138, e.g. being a plastic tube holding the flexible material 137 to the main body 10.

Further, at an end of the flexible material an elastic member 139 is illustrated. The elastic member is arranged to close the flexible material 137 when the pressure in the room volume is between the positive pressure threshold level and the negative pressure threshold level, which is illustrated in fig 5a and 5b in the illustrations marked "A".

If the pressure increase above the positive pressure threshold level the elastic member 139 expands so as to open the flexible material 137 and thereby allow an outlet flow of gas from said room volume. This is shown in both figure 5a and 5b in the first versions marked with "B". Further, if the pressure drops below the negative pressure threshold level the elastic member 139 expands so as to open the flexible material 137 to allow an inlet flow of gas from said room volume. This is illustrated by the other open state figures (marked with B) of fig 5a and 5b.

In fig 5a a single valve member is used and in fig. 5b two portions of the valve member is used, a first portion 137a and a second portion 137b. The first and second portions are serially arranged in the flow direction and are identical in the illustration. It is however possible to make the first and second portion with different configurations e.g. by having different elasticity in the elastic parts in order to control the flow of gas through the two portions. One advantage with having a first 137a and a serially arranged second 137b portion is that an intermediate insulating volume 140 is created between the first and second portions when they are in the closed state A as shown in fig 5b. This vastly increase the insulating capability to the device.

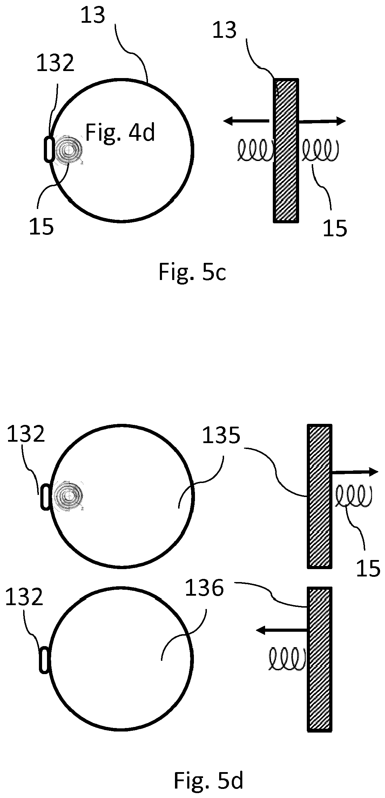

In fig 5c the valve member is a single valve member 13 that is pivotable in two different directions, the first direction as a response to that the pressure in the room volume drops below the negative pressure threshold level P_{N}, and the second direction as a response to to that the pressure in the room volume exceed the positive pressure threshold level P_{P}.

Further, in fig. 5d the valve member comprises two valve portions 135,136, wherein an outlet portion 135 for letting out air during pressure levels above said positive pressure threshold level P_{P} and one inlet portion 136 for letting in air during pressure levels below the negative pressure P_{N} threshold level. The mechanical function of respective portion is the same as in fig 5c, where the inlet portion 136 pivots in an inward direction as a response to that the pressure in the room volume drops below the negative pressure threshold level P_{N}, and the outlet portion 135 pivots in an outward direction as a response to to that the pressure in the room volume exceed the positive pressure threshold level P_{P}. Hereby, pressure relief is made possible in two juxtaposed valve portions, one arranged for each direction of flow.

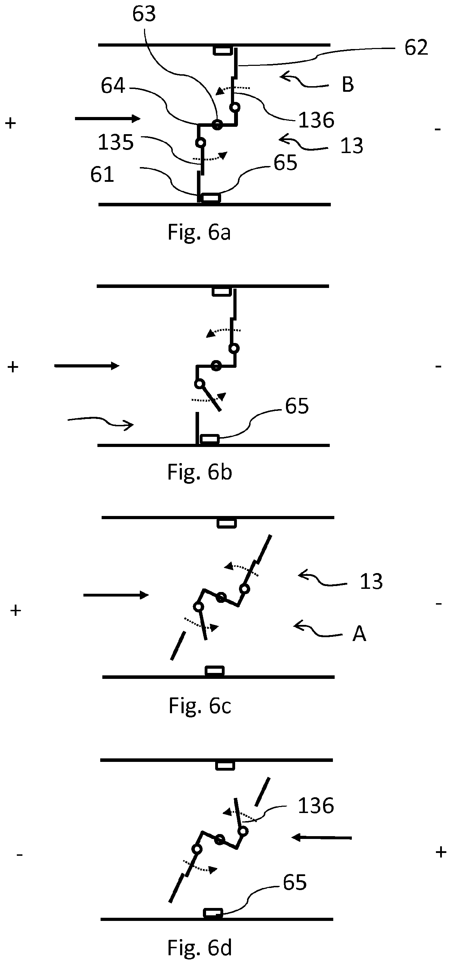

Figure 6a-6d illustrates a top cross-sectional view of the valve member when having a rotational axle 63, around which the valve member 13 may rotate. The rotation will happen in response to a pressure difference in the first opening relative the second opening. The arrows in the figure illustrates in which way the gas should flow for achieving the pressure relief, also indicated by the +/- signs. The valve member comprises two portions (as has also been explained in relation to fig. 4b); an outlet portion 135 for letting out air during pressure levels above said positive pressure P_{P} threshold level and one inlet portion 136 for letting in air in the room volume during pressure levels below the negative pressure P_{N} threshold level. The outlet portion 135 is arranged on a first side 61 illustrated on the lower part of the figure 6a, and the inlet portion 136 is arranged on the second side 62 illustrated in the upper part of figure 6a. The first side 61 is arranged on an opposite side of the rotational axle 63, relative the second side 62. Moreover, the outlet portion 135 and the inlet portion 136 are formed as latches on the two sides. When a pressure increase inside the room volume increase above the positive pressure P_{P} threshold value, the outlet portion 135 will open to let air out, as is illustrated in fig 6b. Further, as a consequence of that the outlet portion 135 opens, the whole valve member 13 will rotate (clockwise in the figure, but could be any constructed to rotate in any direction) to allow a larger flow of gas from the room volume to faster pressure relief the room relative a pressure outside of the room volume. This is achieved since the pressure on the first side is reduced when the outlet portion opens. This is illustrated in fig 6c.

Further, if the pressure in the room volume falls below the negative pressure P_{N} threshold level the inlet portion 136 would open and thereafter the valve member 13 would rotated (in the same direction in the illustrated example), allowing gas to enter the room volume to achieve the pressure relief.

Moreover, the valve member 13 may have a connecting portion 64 extending perpendicular to the rotational axle to axially displace the first side 61 from the second side 62. However, the valve member may not have the connection portion, so that the first 61 and second 62 side are axially aligned.

Further, as already explained in relation to the above embodiments which in large are fully compatible with the embodiment in fig. 6a-6d, the form of the pressure regulating device may have e.g. around circumference, or a square formed periphery.

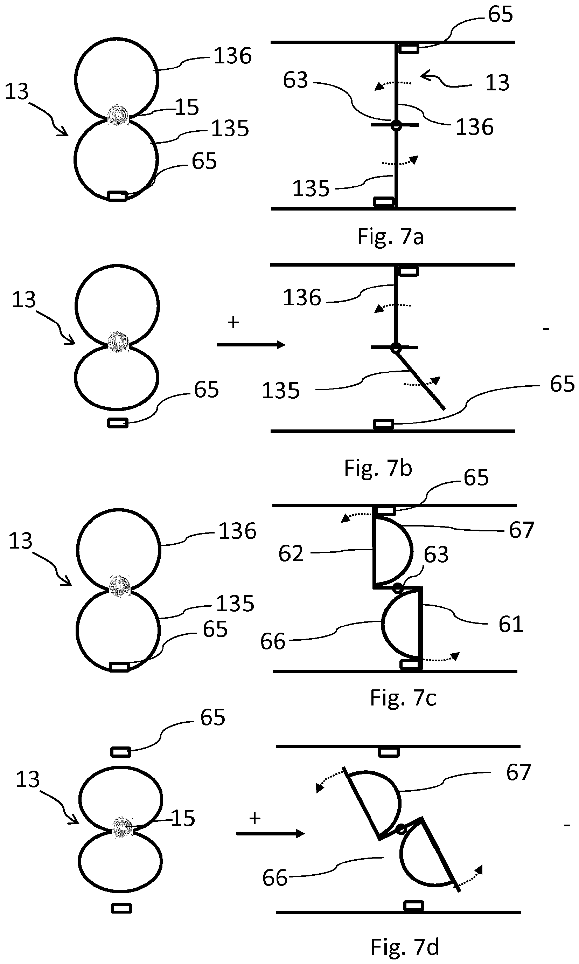

Moving on to the final set of figures, fig 7a - 7d shows examples where the pressure regulator also comprise a rotational axle 63, around which the valve member 13 may rotate. In the illustrations the valve means 13 is illustrated in a front view to the right and in a cross-sectional top view to the left. In fig 7a and 7b the valve member 13 comprise two portions; an outlet portion 135 for letting out air during pressure levels above said positive pressure threshold level and an inlet portion 136 for letting in air in the room volume during pressure levels below said negative pressure threshold level. The outlet portion 135 pivots around the rotational axle 63 without affecting the orientation of the inlet portion 135. Likewise, the inlet portion 135 may be individually pivotable for letting in air during pressure levels below the negative pressure threshold level. The two portions may be placed in two separated holes, as individual opposing 1-way valves, cooperating to form a 2-way pressure regulating device. However, they may also be incorporated in the same hole and cooperatively act as the 2-way pressure regulating device.

Also, the pressure regulating unit 1 in these embodiments (in any of the embodiments) may comprise a stopping means 65 for stopping the inlet portion 136 and/or the outlet portion 137 in its closed position. Further, but not illustrated in these figures the pressure regulating unit may comprise returning means 15 of any type of means for bringing the outlet/inlet portion into the closed position. E.g. an electric actuator or a resilient material or device.

Further, in fig. 7a both the outlet and inlet portions are closed, and held against the stop. In Fig 7b, the outlet portion 135 is opened to allow a flow of gas out from the room volume. This is hard to see in the front view (but you can tell that the outlet portion does not seem to be entirely circular, but in the side view the opening is clearly illustrated.

Fig. 7c and 7d are largely analogue with fig 7a/7b, but the outlet/inlet portions are connected to pivot together around the rotating axle 63. As in the above examples, the valve member 13 comprises an outlet portion 135 for letting out air during pressure levels above said positive pressure P_{P} threshold level and one inlet portion 136 for letting in air in the room volume during pressure levels below the negative pressure P_{N} threshold level. The outlet portion 135 is arranged on a first side 61 illustrated on the lower part of the figure 6a, and the inlet portion 136 is arranged on the second side 62 illustrated in the upper part of figure 6a. The first side 61 is arranged on an opposite side of the rotational axle 63, relative the second side 62. Moreover, not illustrated before, in the valve member 13 illustrated in fig 7c and 7d, the two portions 135 and 136 are a part of the respective sides 61, 62 and they comprise a first arched surface 66 and a second arched surface 67, respectively. The two arched surfaces 66, 67 are thereby arranged on different sides of the rotational axle 63, and the first arched surface 66 is facing the first opening (towards the room volume) and the second arched surface 67 faces the second opening (towards another volume than the room volume). On the axial side facing the first opening the valve member is flat on the radially opposing side 68 relative the first arched surface 66. Likewise, on the axial side facing the second opening the valve member is flat on the radially opposing side 69 relative the second arched surface 67. The rotational axle 63 is placed centrally, but even so the valve member 13 will rotate around the central axle 63 as a result of the pressure difference being negative or positive, since the two arched surfaces 66, 67 will have a larger pressurized surface than the flat sides 68, 69 facing the same opening but on the other side of the rotational axle 63.

## Claims

1. A pressure regulating unit (1) for regulating the pressure resulted from a fire in a room (100) volume, comprising:
- a main body (10) comprising a first opening (11) adapted to be mounted in fluid connection to the inside of said room volume, and a second opening (12) adapted to be mounted in fluid connection to an outside of said room volume, and
- a valve member (13) arranged between said first opening and said second opening, said valve member being movable between a first closed position (A) and a second open position (B), wherein
said valve member opens when the pressure in said room volume exceeds a predetermined positive pressure (P_{P}) threshold level or falls below a predetermined negative pressure (P_{N}) threshold level and is in said closed position during pressure levels in the room volume being between said positive pressure threshold level and negative pressure threshold level.

2. The pressure regulating unit (1) according to claim 1, wherein said valve member (13) automatically returns to the closed position when the pressure in said room volume returns to a level that lies between a predetermined positive pressure threshold level (P_{P}) and a predetermined negative pressure (P_{N}) threshold level.

3. The pressure regulating unit (1) according to any one of claims 1-2, wherein said positive pressure threshold level and/or said negative pressure threshold level is calculated based on the force required to evacuate the room volume, by opening a door or a window.

4. The pressure regulating unit (1) according to any one of claims 1-3, wherein said positive pressure threshold level and/or said negative pressure threshold level is at least about 50Pa/-50Pa, least about 100Pa/-100Pa, at least about 150Pa/-150Pa, or at least about 250Pa/- 250Pa.

5. The pressure regulating unit (1) according to any of the preceding claims, wherein the valve unit (13) is sized and formed so that the pressure increase/decrease in the room volume alone moves the valve member (13) from the closed position (A) to the open position (B).

6. The pressure regulating unit (1) according to any of the preceding claims, wherein the valve means (13) is deformable so that it may change from an open state to a closed state and vice versa.

7. The pressure regulating unit (1) according to Claim 6, wherein the valve means (13) is deformable by means of a flexible material.

8. The pressure regulating unit (1) according to any of the preceding claims, further comprising a returning means (15) for returning the valve means (13) from the open position to the closed position.

9. The pressure regulating unit (1) according to claims 1-9, wherein the force the returning means (15) exerts on the valve means (13) for bringing it to, or keeping it in, the closed positon is based on calculations derived from the positive pressure threshold level or negative pressure threshold level.

10. The pressure regulating unit (1) according to claim 8 or 9, wherein the returning means (15) is a springing means, such as a spring, coil spring or similar.

11. The pressure regulating unit (1) according to any of the preceding claims, wherein the valve member (13) comprise an outlet portion for letting out air during pressure levels above said positive pressure threshold level and one inlet portion for letting in air during pressure levels below the negative pressure threshold level.

12. The pressure regulating unit (1) according to claim 11, wherein the outlet portion is juxtaposed arranged relative the inlet portion.

13. The pressure regulating unit (1) according to any of the preceding claims, wherein the valve member (13) comprise two portions (137a, 137b) being axially displaced relative each other, so as to create an intermediate insulating volume (140).

14. A room (100) comprising
- a plurality of surfaces defining a room volume and restricting flow of gas to/from said room volume,
- an opening in at least one of said plurality of surfaces, and
- a pressure regulating unit according to any of claims 1-13, wherein said pressure regulating unit is installed in said opening to allow flow of gas to/from said room so as to pressure neutralize said room.

15. A room according to claim14, further comprising additional openings in at least one of said plurality of surfaces, and one pressure regulating unit according to any of claims 1-13 installed in each one of said additional openings to allow flow of gas to/from said room so as to pressure neutralize said room.
